(19) Europäisches Patentamt

European Patent Office

Office européen des brevets

(11) EP 1 168 578 A2

(12) **EUROPEAN PATENT APPLICATION**

(43) Date of publication:
02.01.2002 Bulletin 2002/01

(51) Int Cl.⁷: $H02K\ 5/173$, $F16C\ 33/30$

(21) Application number: 01303978.9

(22) Date of filing: 01.05.2001

(84) Designated Contracting States:
AT BE CH CY DE DK ES FI FR GB GR IE IT LI LU
MC NL PT SE TR
Designated Extension States:
AL LT LV MK RO SI

(30) Priority: 30.06.2000 JP 2000197919

(71) Applicant: Minebea Kabushiki Kaisha
Kitasaku-gun, Nagano-ken (JP)

(72) Inventors:
• Obara, Rikuro
Kitasaku-gun, Nagano-ken (JP)
• Yoshikawa, Hiroshi
Kitasaku-gun, Nagano-ken (JP)

(74) Representative: Johnstone, Douglas Ian et al
Baron & Warren, 18 South End
Kensington, London W8 5BU (GB)

(54) **Spindle motor**

(57) A spindle motor (1) suitable for use in a hard disk drive of a computer including a base plate (9) supporting coils (6) on a stator (7) and a spindle shaft (2) fixed in a hole therein. A rotor (3) including a ring magnet (8) mounted to confront the coils (6) is rotatably mounted on the spindle shaft (2) by means of two bearing means (4) each including an inner ring and an outer ring of high carbon chromium steel and a set of rolling elements of ceramic material interposed therebetween. The spindle shaft may have a stepped form with a larger diameter portion with a raceway formed directly in an outer surface thereby obviating the requirement for one of the inner rings. Compared to a conventional spindle motor, with bearings including steel rolling elements, the spindle motor according to the invention generates less noise, exhibits less play or tolerance and consumes less current for a given operating speed.

# F I G. 1

**Description**

The present invention relates to an improvement of a spindle motor employed in peripheral devices for computers such as the hard disk drive device, the video tape recorder (VTR), and so on.

Various items of equipment use a spindle motor. A personal computer is one such item in which a high speed spindle motor is used in a compact hard disk drive device of the computer.

A typical bearing means for such a spindle motor has an inner diameter of between 4mm and 6mm and an outer diameter of between 8mm and 15mm. Such a bearing means is referred to as a miniature bearing.

One such bearing means has a structure including a straight shaft, an inner ring having an inner raceway formed on its outer peripheral surface, an outer ring having an outer raceway formed on its inner peripheral surface, and a plurality of rolling elements or balls interposed between the inner raceway and the outer raceway and retained in their position by a retainer.

Another bearing means of another structure has a spindle shaft of stepped structure in which a reduced diameter portion and a larger diameter portion are provided. The bearing means including the stepped shaft further comprises an outer ring of cylindrical configuration disposed around the spindle shaft, and an inner ring having an inner raceway formed on the outer peripheral surface thereof, the inner ring is fitted around the reduced diameter portion of the stepped shaft and secured thereto. A pair of double row outer raceways are formed on an inner peripheral surface of the outer ring. Balls are interposed between the one outer raceway and the inner raceway, and retained in their position by a retainer.

Further, balls are interposed between an inner raceway formed around an outer peripheral surface of the larger diameter portion of the spindle shaft and the other outer raceway, and retained in their position by a retainer.

Recently, a remarkable development or improvement has been achieved in the hard disk devices by miniaturization and densification. Especially for hard disk drive devices of a size equal to or less than 90mm (3.5 inch), the densification is increased rapidly. More recently, a hard disk drive device of a size of 64 mm (2.5 inch) to be incorporated into personal computers of the note book type is also required to have substantially the same memory capacity as that of a hard disk drive device of 90 mm in spite of its small size. In order to enlarge the memory capacity of the hard disk drive device of 64 mm, it is necessary to increase both of the track recording density and the track density. The presently demanded track density is [10 KTPI to 14 KTPI (TPI: Track Per Inch)] from 394 to 551 tracks per mm.

In a hard disk drive device the size of which is 90mm or 64mm, it is necessary to increase the speed of revolution of the magnetic disk or disks to increase the data transfer rate of the hard disk drive device. For example, a hard disk drive device of 90mm requires a speed from 5400 rpm to 7200 rpm, and in some cases, a speed of over 10000 rpm is required.

However, in a bearing means adapted to be incorporated into such hard disk drive devices of small size, localized stresses are generated repeatedly between the balls and the inner and/or outer rings so that the raceway surfaces and the surfaces of the rolling elements tend to be roughened. Thus, the above mentioned bearing means exhibit disadvantages such as increased vibration, the deterioration of the acoustic characteristics (more noises are generated), and the reduction of the lifetime of the bearing means.

In order to prevent the raceway surfaces and the surfaces of the balls from wearing or damaging, the inner and outer rings and the rolling elements are normally formed of high carbon chromium steel (SUJ 2 or the one similar to SUJ 2), and the hardness of the surfaces are increased by the hardening process to HRC 58-64. Provided corrosion resistance is required martensitic stainless steel (one similar to SUS 440 C) may be utilized.

When transporting the spindle motor including a bearing means, rotation of the spindle shaft is inhibited. When vibrations are generated under such circumstances, impact loads are applied repeatedly between the balls and the raceways of the inner and/or outer rings. In such a situation, the balls and the raceways provide metal to metal contact with each other, and no film of grease is formed therebetween.

Thus the rolling elements and the raceways tend to make micro slips repeatedly and generate localized wearing i.e. fretting wear. This fretting wear will affect the vibration and the acoustic characteristics.

Although grease of high viscosity is effective in avoiding such fretting wear, the viscous resistance of such grease will increase the required rotational torque demanded by the motor, thus generating heat energy. Consequently, grease of high viscosity is not preferred.

As the rotational speed of the hard disk drive device is increased an mentioned above, the viscosity of the injected grease tends to decrease by the heat generated in the bearing means. This will interfere with the formation of the film of oil/grease at the contact region between the balls and the raceway surfaces, and in the worst case, there is a risk of seizure caused by a breakdown of the oil film.

When the oil/grease film is not formed on the contact regions between the rolling elements and the raceway surfaces, localized friction occurs, and the surfaces of these regions are damaged or roughened.

When the surfaces are roughened, vibration is increased, the acoustic characteristics deteriorate, and the lifetime of the bearing means is shortened.

Among the above mentioned drawbacks, the generation of vibration is especially undesirable, since vibration affects the run-out of the spindle motor and impairs the precision of the placement of the magnetic head of the high density hard disk drive device.

Accordingly, the object of the present invention is to overcome the above mentioned problems. In accordance with the present invention, a spindle motor is provided which includes a bearing means which will not seize under the high speed rotational operation and in which fretting wear will be reduced. Consequently, densification of the hard disk drive device can be achieved.

These and other objects are achieved by a spindle motor including a bearing means of the present invention.

In a spindle motor in accordance with the first aspect of the present invention, the spindle motor comprises a spindle shaft, a rotor, and a bearing means interposed between the spindle shaft and the rotor, the bearing means including inner and outer rings and rolling elements interposed therebetween, characterised in that the inner and outer rings of the bearing means are made of steel, and the rolling elements are made of ceramic.

The spindle motor in accordance with the second aspect of the present invention has a structure in which the spindle shaft is a straight shaft, and the bearing means is a ball bearing.

The spindle motor in accordance with the third aspect of the present invention has a structure in which the spindle shaft is a stepped shaft including a larger diameter portion and a reduced diameter portion, the outer ring is a cylindrical one surrounding the stepped shaft, the inner ring has an inner raceway on its outer peripheral surface and is fitted around the reduced diameter portion of the spindle shaft and is secured thereto, the bearing means further includes rolling elements interposed between the inner raceway and an outer raceway formed on the inner periphery of the outer ring, and rolling elements interposed between an inner raceway formed directly on the larger diameter portion of the spindle shaft and another outer raceway formed in the inner periphery of the outer ring.

Spindle motors of the above mentioned structure are substantially the same as spindle motors including a bearing means of the prior art in that the motors are rotated by being energized.

Further features of the present invention will become apparent to those skilled in the art to which the present invention relates from reading the following specification with reference to the accompanying drawings, in which:

Fig. 1 is a longitudinal cross sectional view showing the first embodiment of the spindle motor in accordance with the present invention;

Fig. 2 is a longitudinal cross sectional view showing the bearing means employed in the spindle motor of the first embodiment; and

Fig. 3 is a longitudinal cross sectional view showing the second embodiment of the spindle motor in accordance with the present invention.

The preferred embodiments of a spindle motor in accordance with the present invention will now be described.

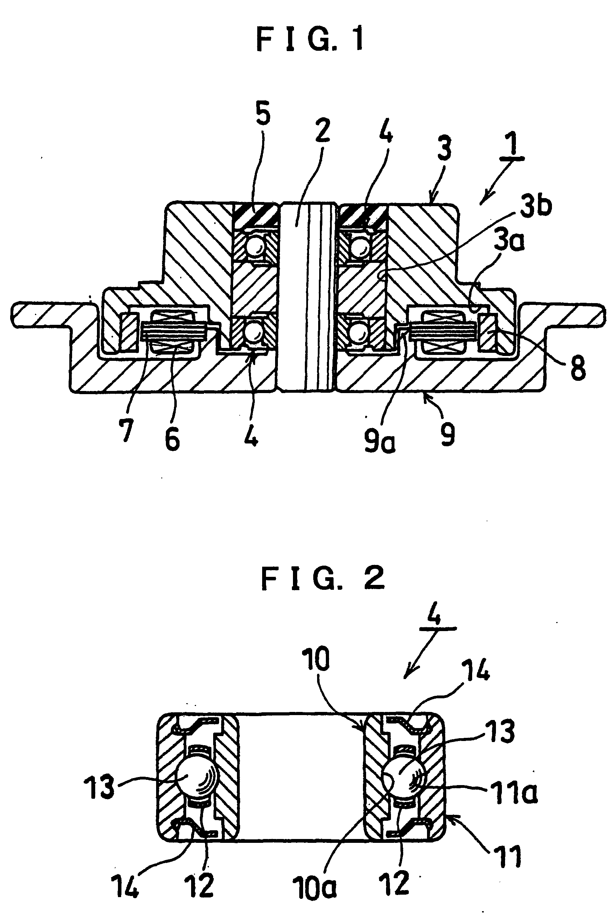

A spindle motor 1 of the first embodiment as shown in fig. 1 includes a spindle shaft 2 secured to a base plate 9 extending vertically therefrom, a rotor 3 of a sleeve like configuration, and a pair of upper and lower bearing means 4 interposed between the outer peripheral surface of the spindle shaft 2 and the inner peripheral surface of a vertically extending central through bore 3b of the rotor 3. Thus the rotor 3 can rotate in high speed around the spindle shaft 2.

Each of the bearing means 4 has the general form of a conventional ball bearing, and the spindle shaft 2 is a straight shaft.

A sealing member 5 of rubber for preventing dirt or dust from migrating into the bearing means 4 is provided above the upper bearing means 4 between the spindle shaft 2 and the rotor 3.

An annular recess 3a is provided on the lower surface of the rotor 3 to accommodate a stator 7 around which a coil 6 is wound. The stator 7 is supported by a protrusion 9a formed on the upper surface of the base plate.

A ring shaped magnet 8 is secured on the inner periphery of the recess 3a so as not to contact with the stator 7.

Upon supplying the alternative current from a control circuit (not shown) to the coil 6 to generate a magnetic field from the pole of the stator 7, the rotor 3 including the magnet 8 is rotated. The load from rotation is supported by the spindle shaft 2 through the bearing means 4.

Each bearing means 4 includes an inner ring 10 having an inner raceway 10a on its outer peripheral surface, an outer ring 11 having an outer raceway 11a on its inner peripheral surface, and a plurality of rolling elements which are shown as balls 13 interposed between the inner raceway 10a and the outer raceway 11a and supported in their positions by a retainer 12.

A pair of sealing plates 14 are provided on both sides of the balls 13 to prevent the grease injected between the inner raceway 10a and the outer raceway 11a from splashing out.

The inner and outer rings 10, 11 of the bearing means 4 are made of high carbon chromium steel (SUJ 2 or one similar to SUJ 2), and the hardness of each surface of the inner raceway 10a and the outer raceway 11a is made to HRC 62. The rolling elements shown as balls 13 are made of ceramic material such as silicon nitride, and the hardness of the surface thereof is made to HRC 75.

The structure of the retainer 12 and the sealing plates 14 are substantially the same as those employed in the prior art.

A comparison is made between the first embodiment in which balls of ceramic material are used and the prior art in which balls of high carbon chromium steel are used.

The comparison is made under the condition that the grease used in the bearing means of the spindle motor of the present invention and that used in the bearing means of the prior art are equal in their quality and quantity. The number of revolutions is set to 5400 rpm.

Measurement of a variety of characteristics of the spindle motor have been made: (i) noise; (ii) the non-repetitive run out (NRRO) in the axial direction; (iii) the value of vibration level (G-value); and (iv) the run current of the motor. The results obtained therefrom are listed in Table 1.

As shown in Table 1, the characteristics of the spindle motor 1 of the present invention compared to a prior art spindle motor is that the noise, the non-repetitive run out (NRRO) in the axial direction, the G-value and the run current of the motor are lower than those of the spindle motor which incorporates the bearing means of the prior art, the balls of which are of high carbon chromium steel.

As can be seen from above, the hard disk drive device including the spindle motor of the present invention shows increased densification, reduced electric energy consumption, and improved acoustic characteristics.

The centrifugal force F acting upon the rolling element when the spindle motor is operated at high rotational speed can be expressed by the following equation:

$$F = M \, (dp/2) \, (\omega m)^2$$

where the mass of the rolling element is M (kg), the pitch diameter of the rolling element is dp (m), the angular velocity (rad/s) of the rolling elements around the axis of the spindle shaft is $\omega m$.

The relative density of the high carbon chromium steel used in making the balls of the bearing means of the prior art bearing incorporated into the spindle motor is about 7.8, whereas the relative density of the silicon nitride used in making the balls of the bearing means of the present invention incorporated into the spindle motor is about 3.2, i.e. less than half of the density of the high carbon chromium steel.

In this connection, the mass of the balls can be reduced to decrease the centrifugal force applied to the balls upon operation at high rotational speed. Thus the load applied due to the centrifugal force of the balls on the outer ring can also be reduced.

It is therefore possible to avoid the damage to the raceway of the outer rings. It is further possible to reduce the power consumption of the spindle motor since the inertia force is reduced by reducing the mass of balls.

The balls of ceramic material have improved wear resistance and heat resistance relative to those of the prior art made of high carbon chromium steel, so that seizure does not happen even on the initial lubrication. Further, seizure does not happen even if the oil film formed between the contact area between the surface of the raceway and the rolling element is broken. Such breakage of the oil film is often caused by the reduction of the viscosity of the grease due to the heating of the ball bearing upon rotation at high speed.

Although in the bearing means 4 as shown in Fig. 2, sealing plates 14 are attached on both ends of each bearing means, in the structure as shown in Fig. 1 in which the bearing means are incorporated into the spindle motor, it might of course be possible to provide the sealing plate 14 only on the side of each bearing means exposed to the outside thereof.

In a structure in which a sealing plate 14 is attached only on one side of the bearing, the inner sealing plate is unnecessary, the number of components can be reduced, and the cost for manufacturing can thereby also be reduced.

The spindle motor of the second embodiment has a spindle shaft 16 of stepped structure in which a reduced diameter portion 16a and a larger diameter portion 16b are provided.

A bearing means 21 including the stepped shaft further comprises an outer ring 18 of cylindrical configuration disposed around the spindle shaft 16, and an inner ring 17 having an inner raceway 17a formed on its outer peripheral surface. The inner ring 17 is fitted around the reduced diameter portion of the stepped shaft and secured thereto.

A pair of double row outer raceways 18a, 18b are formed on an inner peripheral surface of the outer ring 18. Balls 20 are interposed between one outer raceway 18a and the inner raceway 17a, and retained in their position by a retainer 10.

Further, balls 23 are interposed between an inner raceway 16c formed around an outer peripheral surface of the larger diameter portion 16b of the spindle shaft and a further outer raceway 18b, and retained in their position by a retainer 22.

The outer periphery of the cylindrical outer ring 18 is fitted integrally or snugly within the central through bore 3b of the rotor 3.

Other structural elements of the bearing means of the second embodiment which are essentially the same as those of the first embodiment are designated by the same reference numerals as those employed in the first embodiment, and the descriptions thereof are omitted.

In this embodiment, the spindle shaft 16 and the inner and outer rings 17 and 18 of the bearing means are made of high carbon chromium steel (SUJ 2 or one similar to SUJ 2), and the rolling elements or balls 20, 23 are made of ceramic material such as silicon nitride, and the hardness of the surface thereof is made to HRC 75.

Regarding the spindle motor 15 of such structure, a comparison and measurement was also made relative to the prior art in the same manner as mentioned above. The measured values of the noise, the non-repetitive run out in the axial direction, the G-value, and the run current of the motor were confirmed to be reduced as for the results shown in Table 1.

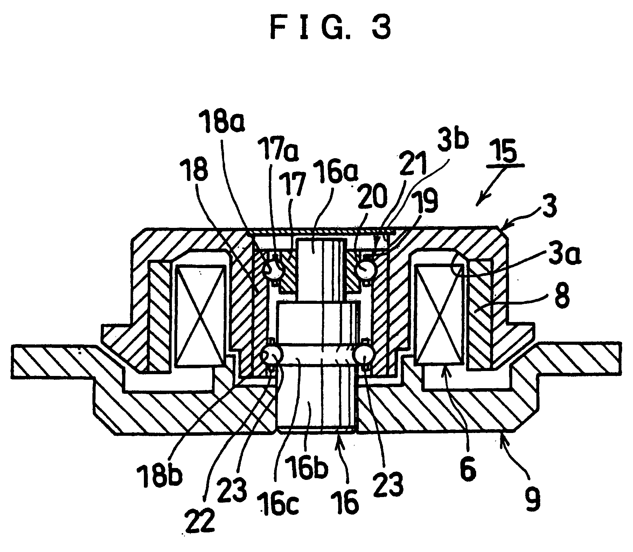

Although the bearing means 21 incorporated into the spindle motor as shown in Fig. 3 has a structure in which no sealing plates are provided, a structure in which the sealing plates are attached to prevent the injected grease from splashing out can also be adopted.

Although silicon nitride material is used to form the balls in the above mentioned embodiments, the balls can also be made of fine ceramics such as alumina, zirconia, silicon carbide, and so on.

Further, only the balls are made of ceramic material. The inner and outer rings can also be made of ceramic material.

The present invention is a spindle motor of the above described structure into which a bearing apparatus including inner and outer rings of steel and rolling elements of ceramic material are incorporated. In this connection, the raceway surfaces of the inner and outer rings as well as the surfaces of the rolling elements are hard to damage. The centrifugal forces applied to the rolling elements do not increase even if the spindle motor is rotated at high speed, so that the load applied to the outer ring can also be limited, the acoustic characteristics (the level of the noise generated) and/or the vibration characteristics are improved, and the lifetime of the bearing means can be extended.

While particular embodiments of the present invention have been illustrated and described, it should be obvious to those skilled in the art that various changes and modifications can be made without departing from the scope of the invention.

TABLE 1

| The characteristes of the spindle motor | The spindle motor including the bearing means of the invention | The spindle motor including the bearing means of the prior art |
|---|---|---|
| noise generated (dB) | 28.5 | 29.3 |
| G–value (mG) | 13.15 | 17.23 |
| NRRO (μm) | 0.118 | 0.174 |
| run current of the motor (mA) | 81.65 | 97.6 |

**Claims**

1. A spindle motor (1) comprising a spindle shaft (2), a rotor (3), and a bearing means (4) interposed between the spindle shaft (2) and the rotor (3), the bearing means (4) including inner and outer rings (10, 11) and rolling elements

6

(13) interposed therebetween, wherein the inner and outer rings (10, 11) of the bearing means (4) are made of steel, and the rolling elements (13) are made of ceramic.

2. The spindle motor (1) according to claim 1 wherein the spindle shaft (2) is a straight shaft, and the bearing means (4) comprise ball bearings.

3. The spindle motor according to claim 1 wherein the spindle shaft (16) is a stepped shaft including a larger diameter portion (16b) and a reduced diameter portion (16a), the outer ring (18) is a cylindrical one surrounding the stepped shaft (16), the inner ring (17) has an inner raceway (17a) on its outer peripheral surface and is fitted around the reduced diameter portion (16a) of the spindle shaft (16) and secured thereto, the bearing means (21) further includes rolling elements (20) interposed between the inner raceway (17a) and an outer raceway (18a) formed on the inner periphery of the outer ring (18), and rolling elements (23) interposed between an inner raceway (16c) formed directly on the larger diameter portion (16b) of the spindle shaft (16) and another outer raceway (18b) formed on the inner periphery of the outer ring (18).

F I G. 1

F I G. 2

# F I G. 3